# EUROPEAN PATENT APPLICATION

(11) **EP 3 812 139 A1**
(43) Date of publication of application: **28.04.2021**
(21) Application number: 19205144.9
(22) Date of filing: 24.10.2019
(51) Int. Cl.: B29C 70/44, B29C 51/00, B29C 51/10, B29C 51/28, B29K 307/04, B29K 23/00, B29K 67/00, B29K 101/12, B29K 309/08

(54) **MANUFACTURE OF COMPOSITE PARTS**

(71) Applicant: Arrival Limited, London W14 8TS (GB)
(72) Inventor: THOMPSON, Rob, London, W14 8TS (GB); SVERDLOV, Denis, London, W14 8TS (GB)
(74) Representative: Korenberg, Alexander Tal

(57) **Abstract**

The disclosed manufacturing method and apparatus provide an efficient approach to the arranging and fusing steps required to manufacture composite parts, which can be readily automated. The result is a much simpler, lower cost method of manufacturing composite parts. Specifically, a method of manufacturing a composite part comprises providing a composite precursor material (206) on a supporting surface (202), the composite precursor material comprising structural fibres; providing a mould (212) above the composite precursor material; creating a pressure differential across the composite precursor material to conform the composite precursor material to the mould; fusing the composite precursor material to form the composite part; and finally removing the composite part from the mould. A corresponding apparatus is also disclosed.

## Description

The present disclosure relates to a method of manufacturing composite parts, and an apparatus for performing the method.

A composite part is made from two or more constituent materials with different physical or chemical properties that, when combined, produce a part with characteristics different from the individual components. The individual components remain separate and distinct within the finished composite, differentiating composites from mixtures. Composite parts may be preferred for many reasons, for example composite parts may offer a mechanical or cost advantage when compared to parts made from mono-materials.

Thermoplastic composites are composites comprising a heat-processable thermoplastic polymer or a thermoplastic polymer polymerised in situ. Composite parts formed from thermoplastic composite materials, such as fabrics made from commingled glass and thermoplastic polymer fibres, may be preferred to thermoset composites since they tend to be tougher and recyclable; and certain types exhibit excellent resistance to chemicals and weathering (with increased molecular weight and crystallinity, thermoplastics become stiffer, stronger and more resistant to heat and chemicals).

A known technique for forming thermoset and thermoplastic composite parts uses vacuum bag moulding (also known as vacuum bagging). Layers of structural materials are first arranged in a vacuum bag. Air is sucked out of the bag to secure the layers in position relative to each other and the layers are fused, for example by melting a thermoplastic component or curing a resin incorporating the structural materials. However, the process of preparing a vacuum bag is usually time consuming and done manually. Further, it can be difficult to accurately align the thermoplastic composite materials inside the vacuum bag. This makes vacuum bag moulding good for prototyping but less suited to mass production.

An alternative known technique is to form composite parts using a mould tool that applies mechanical pressure to form the part. However, such mechanical tools are capital intensive and require significant lead times to set up the production of a given part, making changes in production expensive and time consuming. As such, this method is unsuitable for gradual ramp up of production.

Therefore, a method of manufacturing composite parts that is both fast and inherently flexible is required.

Aspects of the disclosure are set out in the independent claims and optional features are set out in the claims dependent thereto.

The disclosed manufacturing method and apparatus provide an efficient approach to the arranging and fusing steps required to manufacture composite parts, which can be readily automated. The result is a much simpler, lower cost method of manufacturing composite parts.

In some aspects, a method of manufacturing a composite part comprises providing a composite precursor material on a supporting surface, the composite precursor material comprising structural fibres; providing a mould above the composite precursor material; creating a pressure differential across the composite precursor material to conform the composite precursor material to the mould; fusing the composite precursor material to form the composite part; and finally removing the composite part from the mould.

The disclosed method provides a way of manufacturing composite parts without the need for vacuum bagging or draping of precursor materials into a mould. This is achieved by using a supporting surface to lay out and arrange the precursor materials, which is much simpler than arranging precursor materials in a vacuum bag or precisely draping materials in three dimensions. Since the supporting surface is below the precursor material, the mould being above, the precursor material is supported on the supporting surface with the help of gravity, providing a simplified arrangement for holding the precursor material in place prior to urging the precursor material into the mould. Where arranging the precursor materials is the rate determining step in the manufacture of thermoplastic composite parts, the current method may provide a significant time saving.

Additional time savings may be realised if the precursor materials are cut to shape on the supporting surface in situ or are precursor material is not pre-cut to shape but the formed part is cut-out after forming on the supporting surface. Further efficiencies can be achieved by providing the pre-cursor material in an automated fashion from a roll of fabric or on conveyor belt, both of which are enabled by virtue of the materials being first laid out on a flat surface. Furthermore, since the precursor materials can be heated while still laid out (before being pressed into a mould), the present method does not require expensive heated or double-sided moulds, which are capital intensive and require significant lead times to tool up for the production of a given part.

It will be appreciated that fusing the composite precursor material may comprise, for example, consolidating, fully or partially melting or sintering the composite precursor material, and/or may comprise activating a chemical reaction, such as a polymerisation reaction. The composite precursor material may comprise two or more sub-layers, for example sub-layers formed from a mesh of structural fibres, alternating layers of polymer and fibres, multiple layers of woven or non-woven composite fabric. One or more cores, for example honeycomb or foam cores as described further below, may be disposed may be disposed between the layers. The fibres may be glass fibres, carbon fibres or any other type of fibre reinforcement. The mould may be arranged to move into place above the composite precursor material. The mould may be raised and lowered, or moved into place mechanically, robotically and/or hydraulically.

In some embodiments, fusing the composite precursor material comprises applying heat to the composite precursor material to raise the temperature of the composite precursor material above a reaction threshold temperature to fuse the precursor material; and cooling the composite precursor material to below the reaction threshold temperature to set the composite part, prior to removing the composite part from the mould. The heating can precede applying pressure and vice versa. When the composite precursor material is cooled to below the reaction threshold temperature to set the composite part, it is set in the sense that it becomes substantially solid and fixed in shape. The reaction threshold temperature can be the temperature at which a physical reaction occurs (such as melting, partial melting, consolidation or sintering), or the temperature at which a chemical reaction occurs (such as polymerisation).

The composite precursor material comprises a thermoplastic polymer. More specifically, the composite precursor material may comprise thermoplastic polymer fibres, and the thermoplastic polymer fibres may be combined, for example commingled or parallel woven, with the structural fibres to form a yarn. The combined thermoplastic polymer fibres and structural fibres may be woven together to form a fabric or may be otherwise combined to form a non-woven fabric. The composite precursor material may comprise several structural layers comprising structural fibres. The composite precursor material may in any case comprise a surface layer (which in turn may have one or more layers). The terms "yarn" and thread are used in a broad sense to cover any yarn or thread of a suitable form factor to be woven, knitted or otherwise constructed into a fabric. In the same sense, the term "fibre" is understood to cover a wide range filaments and cross-sectional form factors of the fibre and is understood to cover tape, and in particular spread tow tape, in relation to either or both of reinforcing and thermoplastic polymer fibres. The yarn may be a combined yarn formed by combining, for example commingling or parallel weaving, different fibres, for example fibres of thermoplastic polymer and reinforcing fibres. A fabric for use in the disclosed processes may be constructed from such a yarn by weaving, knitting or in any other suitable manner.

Fusing a composite precursor material comprising a thermoplastic polymer to form the composite part may comprise sintering, melting or partially melting (for example melting the outside of fibres of the thermoplastic polymer) the composite precursor material. It may also comprise consolidating the thermoplastic polymer and structural fibres, for example heating them such that the thermoplastic polymer becomes fluid enough to flow around the structural fibres. In these cases, the reaction threshold temperature may be the melting point of the thermoplastic polymer or the glass transition temperature of the thermoplastic polymer. Alternatively, fusing a composite precursor material comprising a heat activated thermosetting resin (also known as thermoset) also comprises heating the thermosetting resin, wherein the composite precursor material fuses upon heating, possibly in a catalyst triggered reaction. Fusing a composite precursor material comprising an adhesive or thermosetting resin, such as an epoxy resin may comprise allowing the adhesive to set or the resin to cure, either with or without the provision of additional heat during heat processing. The adhesive or resin may be a fast-setting adhesive or fast-curing resin, respectively.

In accordance with the above, the reaction threshold temperature is a temperature threshold at which a physical (e.g. melting) or chemical (e.g. polymerisation) reaction occurs.

In some embodiments, providing the precursor material involves paying out precursor material from a first roll and taking up waste material from a previous manufacturing step on a second roll, the first and second rolls being disposed on opposite sides of the surface. In this way, roll to roll manufacturing of composite parts is provided.

In some embodiments, the pressure differential across the composite precursor material is created by increasing the pressure underneath the composite precursor material. Alternatively, or additionally, gas may be evacuated from the mould. A pressure source used to create the pressure differential could be a pump and could be a source of negative pressure and/or positive pressure, as the case may be. In some embodiments, the composite precursor material is disposed on a diaphragm and the pressure differential is also created across the diaphragm to conform the composite precursor material to the mould.

In embodiments with a diaphragm, the supporting surface may be the diaphragm and the precursor material may be laid out on the diaphragm. The diaphragm can be supported in turn on a further supporting surface on a supporting member like a table or any other suitable supporting member or can be secured in a frame or the like, without the need for a separate further supporting surface. When there is no diaphragm, the supporting surface may be any suitable surface the precursor can be laid out on, for example a surface of a table, floor, shelf, block or similar.

In some embodiments, a fluid (liquid or gas as the case may be) tight seal may be formed between the diaphragm and the supporting surface and/or the mould. Having a tight seal facilitates the generation of a pressure differential but is not necessary to achieve this, as an amount of fluid flow leaking from between the diaphragm and any supporting surface and/or mould can be compensated by fluid flow from a reservoir.

In some embodiments, the method further comprises cutting the composite precursor material on the supporting surface to release a formed part from the pre-cursor material. Alternatively or additionally, the composite pre-cursor material may be pre-cut to shape on the supporting surface or otherwise.

In further aspects, an apparatus for manufacturing a composite part comprises a supporting surface for laying out a composite precursor material comprising structural fibres. A mould (which may comprise a surface pattern for imparting a corresponding pattern to the composite precursor material) is disposed above or moveable to being above the supporting surface for receiving the composite precursor material and one or more fluid conduits are configured to remove or supply fluid to create a pressure differential across the composite precursor material to conform the composite precursor material to the mould. Such an apparatus supports implementation of a method as described above.

In some embodiments, the apparatus comprises a diaphragm to provide the supporting surface and the fluid conduits are configured to create the pressure differential across the diaphragm.

The apparatus may comprise, in some embodiments, a heat source for heating the composite precursor material, in some specific embodiments with a supporting member for carrying or providing the supporting surface, integrated into the supporting member. Alternatively, for example when a diaphragm is provided, it may be preferable to put a heater above the table to not heat through the diaphragm. In some embodiments, the diaphragm is disposed on the supporting member and the fluid conduits pass through the supporting member.

In some embodiments, a respective set of one or more rolls are disposed on (laterally) opposed sides of the mould and supporting surface to provide the precursor composite material from one set of rolls and take up waste material (offcut material) with the other set of rolls. In this way, roll to roll processing is supported.

A cutter configured to cut the composite precursor material on the supporting surface may be provided. The cutter may be arranged to release a formed part from precursor composite material, in particular if roll to roll processing without pre-cutting occurs. Alternatively or additionally, the cutter may be used to pre-cut the composite precursor material.

Specific embodiments will now be described by way of example with reference to the drawings of which:
- Figure 1: illustrates a flow chart for a method of manufacturing a composite part;
- Figure 2: illustrates part of an apparatus for manufacturing a composite part;
- Figure 3: illustrates an apparatus for manufacturing a composite part; and
- Figure 4: illustrates a roll to roll apparatus for manufacturing a composite part.

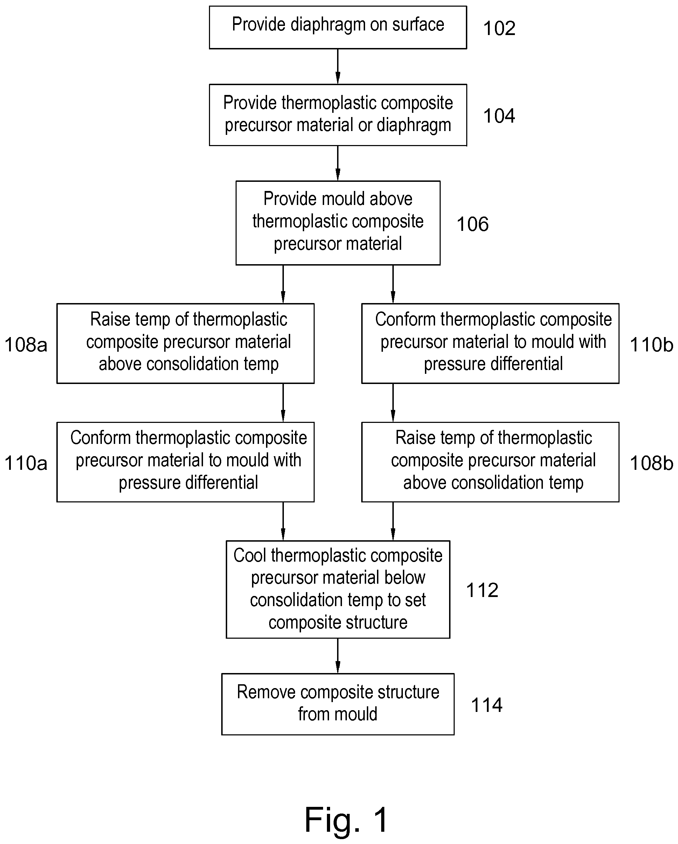

With reference to Figure 1, a method of manufacturing a composite part from a composite material will be described. A diaphragm 204 is provided 102 on a table 202. The table 202 does not need to be a table per se and can be any supporting surface or structure for supporting the diaphragm 204, e.g. a floor, ledge, shelf or any other surface or structure. The table 202 may be a conventional table for supporting the diaphragm 204, although optional advantageous features of the table 202 are discussed below.

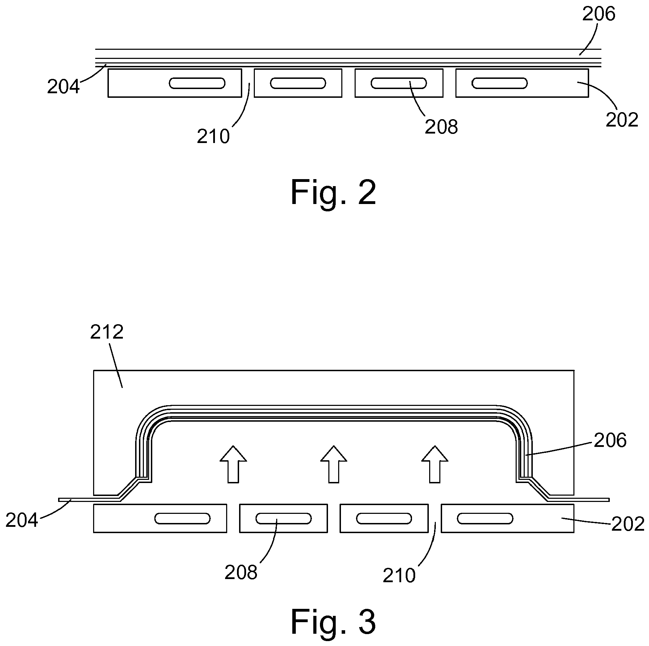

Thermoplastic composite precursor material 206 is provided 104 on the diaphragm 204. This is illustrated in Figure 2, which shows the table 202, diaphragm 204 and thermoplastic composite precursor material 206.

The thermoplastic composite precursor material 206 comprises a thermoplastic polymer, such as polypropylene or polyester. The thermoplastic composite precursor material 206 also comprises a reinforcing material, such as glass or carbon fibres.

The diaphragm 204 is made of any suitable material known to the skilled person used in conventional vacuum bagging processes, such as silicone. In embodiments in which the diaphragm is re-used, the diaphragm is made from a material capable of withstanding the temperatures used to process the composite, for example at the melting point of the polymer. In other embodiments, the diaphragm is itself thermoplastic at the processing temperatures and becomes incorporated with the part precursor material 206 and the resulting part.

An example of a suitable thermoplastic composite precursor material 206 is a combined, for example commingled, glass and thermoplastic weave, which comprises glass fibres commingled or otherwise combined with polypropylene filaments that form a combined yarn, which is woven into a fabric. Similar fabrics are equally suitable. Further examples include unidirectional tape comprising a polypropylene or other thermoplastic polymer matrix and continuous glass or carbon fibre reinforcement.

Of course, the thermoplastic polymer and reinforcing material do not need to be commingled or use otherwise combined yarn. For example, the thermoplastic composite precursor material 206 may be formed from alternating layers of thermoplastic polymer and a reinforcing material, such as alternating layers of polypropylene sheet and reinforcing glass fibre fabric or weave.

As would be understood by the person skilled in the art, while only one thermoplastic composite precursor material 206 is required, multiple layers of the same or different thermoplastic composite precursor material may be assembled on top of each other, as required by the target composite part. For example, two layers of thermoplastic composite precursor material 206 (e.g. two layers of glass fibre/polypropylene weave) may be combined to form a thicker and stronger composite part. Core materials, such as honeycomb, foam and balsa, can be provided on, under or between layers of thermoplastic composite precursor material 206. These core materials can be used to tailor the properties of the target composite part. Core materials include other high-performance fibres, thermoplastic matrix materials and lightweight cores to be used where necessary to provide additional strength, stiffness and durability. For example, honeycomb can provide additional lightweight support, while foam can be used as a core to increase the dimensions of the target composite part without significantly increasing weight.

Thus, the thermoplastic composite precursor material 206 and any additional materials are assembled 104 on the diaphragm 204 according to the requirements of the target composite part. The materials may be cut prior to being placed onto the table 202, or they may be cut in situ, for example using an ultrasonic cutter, laser, saw, stamp-cutter (also known as a cookie-cutter) or any other conventional cutting means known to the skilled person.

The shape of the thermoplastic composite precursor material 206 and any additional layers of material are defined by pre-determined stress as determined by the shape of the target composite part (that is, fibre layout and orientation, as well as the number of layers, is determined by the expected loads and direction of the load). In other words, like the pattern of a suit, the materials are cut and laid out. Methods for determining the shape of the thermoplastic composite precursor material 206 and any additional layers of material, based on a target composite part, are well-known in the fields of vacuum bagging and plastic composite manufacture, and can be readily applied to the present method.

The thermoplastic composite precursor material 206, e.g. commingled or otherwise combined glass and thermoplastic polymer fabric, may be provided from a roll of thermoplastic composite material that is fed onto the diaphragm 204 on the table 202 by a machine, conveyer belt or robot. Accordingly, the step of providing 104 the thermoplastic composite precursor material 206 on the diaphragm 204 can be readily automated. Further, the thermoplastic composite material can be cut into shape in situ (i.e. on the diaphragm 204). This can also be performed by a robot, further automating the process. Thus, laying out the thermoplastic composite precursor material 206 is well suited to automation using well-developed robotic technologies.

With reference to Figure 3, a mould 212 is provided above the thermoplastic composite precursor material 206. The mould 212 can be moved into position above the thermoplastic composite precursor material 206, for example using a robotic arm, or the thermoplastic composite precursor material 206 can be moved under the mould 212, the mould 212 being stationary. That the mould 212 can be moved into position above the thermoplastic composite precursor material 206 on the table 202, or alternatively, the thermoplastic composite precursor material 206 may be slid into the gap between mould 212 and table 202, for example, using a conveyor belt.

Independent of the embodiment, either the precursor material 206 slides across the diaphragm 204 or the diaphragm 204 and precursor material 206 slide into position together. Thus, the diaphragm 204 may be provided together with the precursor material 206.

The mould 212 is a single-sided tool, and more expensive double-sided tools are not required.

Conventional methods of fabricating thermoplastic composite parts comprise using the mould or tool to heat the thermoplastic material. While it is possible to heat the thermoplastic composite precursor material 206 using the mould 212 of the present method, it is typically undesirable to do so, since it is much easier to heat the thermoplastic composite precursor material 206 before it contacts the mould 212 instead. Further, heated moulds are significantly more expensive than unheated moulds.

In first embodiments, while still on the table 202, the thermoplastic composite precursor material 206 is heated 108a to raise the temperature of the thermoplastic composite precursor material 206 above a consolidation temperature.

At the consolidation temperature, the thermoplastic composite precursor material 206 becomes soft (i.e. fluid enough to flow around the structural fibres, when present). The thermoplastic polymer in the thermoplastic composite precursor material 206 may melt at the consolidation temperature, in which case, fibres of the polymer will fuse together when cooled below the melting point, forming a continuous structure.

Thus, the consolidation temperature may be equal to or above the highest of the glass transition and melting temperature of the thermoplastic polymer in the thermoplastic composite precursor material 206, although it may also be lower, so long as the thermoplastic polymer is softened (for example, such that it becomes hot enough to stick to the structural fibres or even fluid enough to infiltrate the structural fibres). The consolidation temperature is typically between 180-220 °C, depending of course on the nature of the thermoplastic polymer present. For example, this temperature range is suitable for polypropylene.

The thermoplastic composite precursor material 206 may be heated using any conventional means known to the skilled person such as using an infra-red heat source or a hot-plate.

In some embodiments, heating elements 208, as illustrated in Figure 3, are located in the table and are used to heat the thermoplastic composite precursor material 206. These may be electric or induction heating elements or channels arranged to circulate hot water or oil, or any other heating element known to the skilled person.

After heating 108a the thermoplastic composite precursor material 206 on the table 202, a pressure differential is created 110a across the diaphragm 204 such that the diaphragm 204 conforms the thermoplastic composite precursor material 206 to the mould 212 and then stretches the thermoplastic composite precursor material 206 to the shape of the mould 212.

The pressure differential may be created 110a using vacuum pressure (negative pressure) alone (for example at 1 bar) by evacuating air from inside the mould 212. In addition to or instead of creating a vacuum on the mould 212 side of the diaphragm 204, a positive pressure (for example up to 8 bar) may be introduced on the table 202 side of the mould 212. This may provide higher definition of detail in the final composite part and a shorter cycle time. Positive pressure may be provided by, for example, pressurised fluid such as pressurised gasses including pressurised air, nitrogen, or any other gas known to the skilled person, or by liquids such as water, oil or other suitable heating media.

In order to help create and maintain the pressure differential, the diaphragm 204 may form a gas tight seal against the table 202 and/or the mould 212, although this is not essential since a pressure differential can still be maintained even if there is a gap between the diaphragm 204 and table 202 or mould 212.

Preferably, fluid conduits 210, as illustrated in Figure 3, are located in the table 202. Gas flows in/out through individual fluid conduits 210 to allow for controlled stretching of the diaphragm 204 and maximise forming efficiency.

In second embodiments, the thermoplastic composite precursor material 206 may be pressed 110b against the mould 212, as described above, before being heated 108b. Thus, the thermoplastic composite precursor material 206 is heated while in the mould 212. In this instance, instead of or in addition to the heating methods described above, the mould 212 may be used to heat the thermoplastic composite precursor material 206. For example, the mould 212 may comprise electric heating elements or channels for circulating hot water or oil.

Finally, after being heated and conformed to the mould 212, the thermoplastic composite precursor material 206 is cooled 112 to below the consolidation temperature to fuse or set the composite part.

This may be done passively, by simply removing the heat source used to heat the thermoplastic composite precursor material 206, or actively, for example using a chiller or cold air source.

The composite part can then be removed 114 from the mould 212 after releasing the pressure differential.

A new thermoplastic composite precursor material 206 can then be provided and, optionally, cut to size in situ, both in an automated fashion or otherwise, and the process repeated.

In accordance with the above, an embodiment of an apparatus for manufacturing a composite part comprises a table 202 for laying out a thermoplastic composite precursor material 206 on a surface of the table 202. A table 202 is just one embodiment of providing a supporting surface for the precursor material 206 and a supporting surface may be provided in any suitable way in various embodiments, for example on a floor, block, shelf, ledge and so forth.

A mould 212 for receiving the thermoplastic composite precursor material 206 is disposed above the table 202 on a moveable support gantry to allow the mould to be brought into contact with the thermoplastic composite precursor material 206 for forming the composite part, as described above. In some embodiments, the mould 212 is fixed instead of being moveable and disposed with a clearance above the table 202 to enable the thermoplastic composite precursor material 206 on the diaphragm 204 to be slid into position under the mould 212. In the latter case in particular, the precursor material 206 may slide across the diaphragm 204 or the diaphragm 204 and precursor material 206 may slide into position together. The diaphragm 204 may in some embodiments be part of the apparatus or may be provided separately together with the precursor material 206.

The apparatus may further comprise a heat source 208 for heating the thermoplastic composite precursor material 206. The heat source 208 may be an electric heating element or a channel arranged to circulate hot water or oil, or any other heating element known to the skilled person. The heat source 208 may be integrated into the supporting surface/table 202 or into the thermoplastic composite precursor material 206. For example, conductive fibres may be incorporated in the thermoplastic composite precursor material and used for ohmic or inductive heating.

The apparatus comprises one or more fluid conduits 210 configured to remove or supply fluid to create a pressure differential across the diaphragm 204 and thermoplastic composite precursor material 206 to conform the precursor material 206 to the mould 212. The apparatus may further comprise one or more pumps or pressure sources for creating the pressure differential across the diaphragm 204, or these may be provided separately, for example in the form of a vacuum or compressed air line. Whether the pump or pressure source is provided with the apparatus or not, the table 202 (or other supporting surface) and/or the mould 212, as the case may be, may comprise the fluid conduits 210 for supplying or removing fluid through the table 202 surface or an inner surface of the mould 212 to generate the required positive and/or negative pressure.

A robot arm comprising an ultrasonic cutter, laser, saw, stamp-cutter (also known as a cookie-cutter) or any other conventional cutting means known to the skilled person for cutting the thermoplastic composite precursor material 206 may be provided with or in addition to the apparatus.

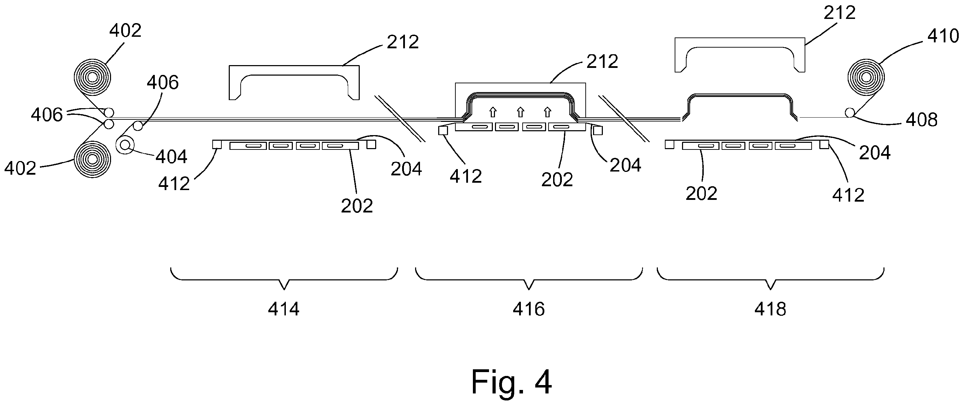

Figure 4 illustrates a roll to roll manufacturing apparatus and method. A set of rolls 402 stores precursor material 206, one roll for each layer of precursor material 206 if there are multiple layers. A further roll 404 stores a surface material 405 in embodiments where such a material is used. The materials from rolls 402, 404 pass through rollers 406 to rollers 408, to be taken up by a waste roll 410. In between the rollers 406, 408, the precursor material 206 and (where present) the surface material 405 pass in between a table 202 (or other surface) as described above and a mould 211 as described above and disposed above the table 202. A diaphragm 204 as described above is disposed between the surface material 405 (where present) or the precursor material 206 and is held in a frame 412. The frame 412 may accommodate the table 202 and provide a clearance around it to increase the range of possible relative motion. It will be appreciated that diaphragm 204 may be held in any other suitable way, for example secured to the table 202 or paid out between a corresponding pair of rolls.

In operation, in a first step 414, a fresh length of material (precursor material 204 and where applicable surface material 405) is paid out from the set of rolls 402 and disposed in between the mould 212 and diaphragm 204. The slack of waste material from a previous manufacturing step is taken up by waste roll 410. In a second step 416 one or both of the table 202 and mould 412 move relative to each other to hold the material and diaphragm against the table, optionally forming a seal between the diaphragm and the table. The frame 412 and table 202 may optionally also move relative to each other to dispose the diaphragm 204 tautly on the table 202. The material is heated and once sufficiently softened is urged into the mould by pressure, for example positive pressure applied through the table 202, as described above. Subsequently, the material is allowed to cool and hence solidify. In a third step 416, one or both of the mould 212 and table 202 move apart to release the part formed by the hardened material and the part is cut out and released from the remainder of the roll to roll material, at which point the apparatus is ready to repeat the process starting again at step 414. The table 202 may remain in contact with the material at this step to provide a support surface to facilitate the cutting out of the formed part and may then, optionally, move away from the fabric to provide a clearance or the table may be stationary during the whole process.

It will be appreciated that the illustration of steps 414 to 418 in Figure 4 is schematic and that the table and mould arrangement in between does not necessarily move laterally between the rolls 406, 408. Rather, the displacement in Figure 4 is representative of the passage of time.

In further embodiments, roll to toll or otherwise, the diaphragm 204 may not be provided. In some embodiments, the thermoplastic composite precursor material is sufficiently impermeable to the pressuring fluid such that the thermoplastic composite precursor material 206 can be urged into contact by the pressure differential in the absence of the diaphragm 204, and so the diaphragm 204 is not essential. Equally, the diaphragm may be suspended in a frame or at suspension points and stretched to provide the surface on which the pre-cursor material can be laid out, so that a separate surface (of a table or otherwise) is not required. These variations can be combined by using a sufficiently impermeable pre-cursor material suspended as described above.

In any of the described embodiments, the thermoplastic composite precursor material 206 may be substituted for a different composite precursor material, such as a composite precursor material comprising an adhesive or thermosetting resin. Since it is not essential to heat such a composite precursor material to fuse or set the composite part, the heating step described above is not essential in this instance and can be omitted. As such, a composite precursor material comprising an adhesive or thermosetting resin will fuse whilst being urged into the mould, in order to form the composite part. Of course, a heating step may still be used to accelerate the fusing of the adhesive or thermosetting resin, respectively, and the heating step may be required, for example if the thermosetting resin is a heat activated thermosetting resin.

It will be appreciated that the above description is made by way of example and not limitation of the scope of the appended claims, including any equivalents as included within the scope of the claims. Various modifications are possible and will be readily apparent to the skilled person in the art. Likewise, features of the described embodiments can be combined with any appropriate aspect described above and optional features of any one aspect can be combined with any other appropriate aspect. The described manufacturing method and apparatus may be used in the context of manufacturing composite parts for electric vehicles, for example. The disclosure is however not limited to this application but rather is applicable to composite parts for any purpose, vehicular or otherwise, and for any type of vehicle, be that other road vehicles, for example being driven by internal combustion engines, naval vehicles such as boats, ships and other vessels and airborne vehicles such as planes, helicopters and the like.

## Claims

1. A method of manufacturing a composite part, the method comprising:
providing a composite precursor material on a supporting surface, the composite precursor material comprising structural fibres;
providing a mould above the composite precursor material;
creating a pressure differential across the composite precursor material to conform the composite precursor material to the mould;
fusing the composite precursor material to form the composite part; and
removing the composite part from the mould.

2. The method of claim 1, wherein fusing the composite precursor material comprises:
applying heat to the composite precursor material to raise the temperature of the composite precursor material above a reaction threshold temperature to fuse the precursor material; and
cooling the composite precursor material to below the reaction threshold temperature to set the composite part, prior to removing the composite part from the mould.

3. The method of claim 2, wherein the composite precursor material comprises a thermoplastic polymer.

4. The method of claim 3, wherein the composite precursor material comprises thermoplastic polymer fibres, and the thermoplastic polymer fibres are combined with the structural fibres, and optionally wherein the combined thermoplastic polymer fibres and structural fibres are woven together to form a fabric.

5. The method of any preceding claim, wherein providing the precursor material comprises paying out precursor material from a first roll and taking up waste material from a previous manufacturing step on a second roll, the first and second rolls being dispose on opposed sides of the mould and supporting surface.

6. The method of any preceding claim, wherein the pressure differential across the composite precursor material is created by increasing the pressure underneath the composite precursor material.

7. The method of any preceding claim, the method further comprising providing a diaphragm, wherein the composite precursor material is provided on the diaphragm and the pressure differential is also created across the diaphragm to conform the composite precursor material to the mould.

8. The method of any preceding claim, the method further comprising cutting the composite precursor material on the supporting surface to release a formed part from the pre-cursor material.

9. An apparatus for manufacturing a composite part, the apparatus comprising:
a supporting surface for laying out a composite precursor material comprising structural fibres;
a mould disposed above or moveable to being above the supporting surface for receiving the composite precursor material; and
one or more fluid conduits configured to remove or supply fluid to create a pressure differential across the composite precursor material to conform the composite precursor material to the mould.

10. The apparatus of claim 9, further comprising a diaphragm, wherein the supporting surface is the surface of the diaphragm and the fluid conduits are configured to create the pressure differential across the diaphragm.

11. The apparatus of claim 9 or 10, comprising a supporting member for carrying or providing the supporting surface, wherein a heat source for heating the composite precursor material is integrated into the supporting member.

12. The apparatus of claim 10, wherein the diaphragm is disposed on a supporting member and the fluid conduits pass through the supporting member, optionally wherein a heat source for heating the composite precursor material is integrated into the supporting member.

13. The apparatus of any one of claims 9 to 12, wherein respective sets of one or more rolls are disposed on opposed sides of the mould and supporting surface to provide the precursor composite material from one set of rolls and take up waste material with the other set of rolls.

14. The apparatus of any of claims 9 to 13, further comprising a cutter configured to cut the composite precursor material on the supporting surface to release a formed part from the precursor composite material

15. The apparatus of any of claims 9 to 14, wherein the apparatus is arranged to perform the method of any of claims 1 to 8.
